(19) Europäisches Patentamt
European Patent Office
Office européen des brevets

(11) **EP 1 743 819 B1**

(12) **EUROPÄISCHE PATENTSCHRIFT**

(45) Veröffentlichungstag und Bekanntmachung des Hinweises auf die Patenterteilung:
**16.09.2009   Patentblatt 2009/38**

(51) Int Cl.:
***B60T 8/172*** *(2006.01)*

(21) Anmeldenummer: 05106341.0

(22) Anmeldetag: **12.07.2005**

(54) **Verfahren und Anordnung zur Bestimmung der Gier- bzw. Rollbewegung bei einem Fahrzeug**

Method and device to calculate the yaw and roll rates in a vehicle

Procédé et dispositif de détermination de la vitesse de lacet et de la vitesse angulaire d'un véhicule

(84) Benannte Vertragsstaaten:
**DE FR GB**

(43) Veröffentlichungstag der Anmeldung:
**17.01.2007   Patentblatt 2007/03**

(73) Patentinhaber: **Ford Global Technologies, LLC, A subsidary of Ford Motor Company Dearborn, MI 48126 (US)**

(72) Erfinder:
• **Hoffmann, Uwe**
  **50823, Köln (DE)**
• **Meier, Jan**
  **50767, Köln (DE)**
• **Wey, Torsten, Dr.**
  **47447, Moers (DE)**

(74) Vertreter: **Drömer, Hans-Carsten et al**
  **Ford-Werke Aktiengesellschaft**
  **Patentabteilung NH/DRP**
  **Henry-Ford-Strasse 1**
  **50725 Köln (DE)**

(56) Entgegenhaltungen:
**DE-A1- 4 226 749**      **DE-A1- 10 212 582**
**DE-A1- 10 215 464**      **US-A- 5 742 918**
**US-A- 5 878 357**        **US-A- 6 161 905**

## Beschreibung

Die vorliegende Erfindung betrifft ein Verfahren zur Bestimmung einer Gierrate bzw. eines Gierbeschleunigung bei einem Fahrzeug, vorzugsweise einem Kraftfahrzeug, das auch zur Bestimmung einer Rollrate bzw. einer Rollbeschleunigung einsetzbar ist, sowie eine Anordnung zur Durchführung des Verfahrens.

Für Regelungsvorgänge im Rahmen eines elektronischen Stabilitätsprogramms (ESP) ist eine möglichst präzise Bestimmung der Bewegung eines Fahrzeugs um seine rotatorischen Achsen - insbesondere um die Gierachse - von grundlegender Bedeutung. Hierzu werden üblicherweise Gierratensensoren eingesetzt, die eine Rotationsbewegung des Fahrzeugs um die Gierachse direkt erfassen. Derartige Gierratensensoren sind jedoch im Vergleich zu linearen Beschleunigungssensoren erheblich teurer und stellen mittlerweile einen maßgeblichen Kostenfaktor bei ESP-Systemen dar. Da ESP für Kraftfahrzeuge zunehmend zur Standardausstattung gehört, besteht unter Kostengesichtspunkten der Wunsch, auf einen dezidierten Gierratensensor verzichten zu können.

Zu diesem Zweck wurde in der US 5 878 357 A vorgeschlagen, den Gierratensensor durch zwei voneinander beabstandet angeordnete Linearbeschleunigungssensoren zu ersetzen. Die Beschleunigungssensoren sind dabei auf einer in Querrichtung des Fahrzeugs (y-Achse) verlaufenden (gedachten) Achse angeordnet, die durch den Massenschwerpunkt des Fahrzeugs verläuft. Die beiden Beschleunigungssensoren messen jeweils die Querbeschleunigung des Fahrzeuges, wobei bei einer Gierbewegung um den Massenschwerpunkt herum durch die Sensoren eine Zentrifugalkraft gemessen wird. Durch Differenzbildung der Sensorsignale und Division durch den Sensorabstand kann letztlich rechnerisch auf die Gierrate geschlossen werden. In der Praxis stößt dieses Konzept jedoch auf meßtechnische Schwierigkeiten. Insbesondere bei kleinen Gierbeschleunigungen ist die Differenz der Meßwerte der beiden Sensoren so gering, daß das Meßrauschen den Ausgangswert völlig dominiert, außerdem ist die Bestimmung der Gierrichtung (d.h. des Vorzeichens des Ausgangswertes) insbesondere bei geringen Gierbeschleunigungen nicht trivial. Deshalb wird in der US 5 878 357 A vorgeschlagen, die Gierrate bei bestimmten Fahrzeuggeschwindigkeiten und Lenkwinkeln alternativ anhand einer kinematischen Schätzung unter Verwendung eines Kalman-Schätzgliedes zu bestimmen. Die Verwendung einer kinematischen Schätzung allein wird jedoch auch nicht als ausreichend erachtet, da insbesondere bei hohen Gierraten Nichtlinearitäten auftreten; in diesem Falle werden die Meßdaten der Beschleunigungssensoren herangezogen. Die in dem o.g. Dokument offenbarte Gierratenbestimmung erweist sich als nicht optimal: Zum einen ist die Verwendung zweier völlig unterschiedlicher Modelle in unterschiedlichen Fahrzeugparameterbereichen mit der Gefahr von Diskontinuitäten im Ausgangssignal an den "Nahtstellen" an den Übergängen zwischen den einzelnen Modellen verbunden. Derartige Diskontinuitäten können zu sicherheitsrelevanten Problemen im ESP-System führen. Zudem ist der in diesem Dokument verwendete kinematische Ansatz stark idealisiert, da Größen wie der Schräglauf-, Schwimm- und Ackermannwinkel nicht berücksichtigt werden. Weiterhin ist es bei dem bekannten Konzept nicht möglich, bei typischen Fahrmanövern auf geneigtem Untergrund (Steilkurve) eine zutreffende Schätzung abzugeben. Damit geht eine Ungenauigkeit einher, die besonders dann spürbar wird, wenn die Längsachse des Fahrzeugs und der Geschwindigkeitsvektor nicht die gleiche Richtung aufweisen, d.h., wenn das Fahrzeug "schwimmt". Schließlich ist die gemäß der o.g. US-Schrift vorgeschlagene Anordnung der Sensoren auf der y-Achse in Höhe des Massenschwerpunktes ungünstig, da die Meßrichtung nicht in der Hauptrichtung der zu messenden Größe liegt und der Abstand der Sensoren recht gering ist.

Demgegenüber liegt der vorliegenden Erfindung die Aufgabe zugrunde, ein Verfahren und eine Anordnung zu schaffen, welches bzw. welche eine präzisere und robustere (d.h. auch bei extremen Fahrmanövern gültige) Gier- bzw. Rollratenbestimmung ohne die Notwendigkeit eines entsprechenden dezidierten Gierratensensors erlaubt.

Die Lösung der vorgenannten Aufgabe erfolgt durch ein Verfahren mit den Merkmalen des Patentanspruches 1. Zur Bestimmung der Gierrate wird insbesondere ein Verfahren gemäß den Merkmalen des Patentanspruches 2 vorgeschlagen. Weiterhin wird eine Anordnung zur Durchführung des Verfahrens gemäß Patentanspruch 8 vorgeschlagen.

Vorteilhafte Ausgestaltungen der Erfindung ergeben sich aus den Unteransprüchen.

Gemäß der Erfindung wird die Gierrate bzw. die Gierbeschleunigung auf der Grundlage eines Einspurmodells bestimmt, das jedoch anhand einer zusätzlich gemessenen Gierbeschleunigung, die aus der Meßwertdifferenz zweier Beschleunigungssensoren gewonnen wird, korrigiert wird. Ein Übergang zwischen verschiedenen Modellen - wie aus dem Stand der Technik bekannt - mit möglicherweise daraus resultierenden Diskontinuitäten wird dadurch vermieden; "schaltende" Einflüsse auf die Gierrate sind im Rahmen der Erfindung nicht vorhanden.

In analoger Weise kann im Rahmen der Erfindung auch eine Rollrate bzw. eine Rollbeschleunigung bestimmt werden, was jedoch nachfolgend nicht jedes Mal ausdrücklich erwähnt wird.

Das Ausmaß der Korrektur wird in einer bevorzugten Ausführungsform der Erfindung - zusätzlich zu der direkten Abhängigkeit von den Meßwerten der beiden Beschleunigungssensoren - auch von anderen Parametern wie der Fahrzeuggeschwindigkeit, der Querbeschleunigung (implizit aus den gemessenen Signalen) sowie der Gierrate (implizit aus den gemessenen Signalen) abhängig gemacht. Die geeigneten Gewichtungsfaktoren für die Korrektur werden bevorzugt bei werksseitigen Kalibrierversuchen durch Vergleich mit den Meßwerten eines dezidierten Gierratensensors in einer Vielzahl fahrdynamischer Situationen bestimmt.

Im Rahmen einer Anordnung zur Durchführung des Verfahrens wird vorgeschlagen, die Sensoren zur Gierratenbestimmung entlang einer gedachten, in Längsrichtung des Fahrzeugs (x-Richtung) verlaufenden Mittelachse anzuordnen, wobei ein möglichst großer Abstand der Sensoren angestrebt wird, da sich das Signal/Rauschverhältnis mit zunehmendem Abstand verbessert. Aber auch eine Anordnung der beiden Sensoren mit beliebigem Abstand in y-Richtung zueinander oder zur Fahrzeugmittelachse ist im Rahmen der Erfindung möglich, ohne daß die Funktion beeinträchtigt würde. Vorteilhaft ist ein geringer Abstand in z-Richtung zur Rollachse. Eine derartige flexiblere, signaltechnisch günstigere Anordnung der Beschleunigungssensoren ist im Rahmen der Erfindung möglich, da im Gegensatz zum Stand der Technik die Positionierung der Sensoren nicht auf einer gedachten, durch den Massenschwerpunkt des Fahrzeugs verlaufenden Querachse erfolgen muß.

Die Erfindung wird nachfolgend anhand der Zeichnungen beispielhaft näher erläutert. Es zeigen:

Fig. 1    ein schematisches Übersichts-Blockdiagramm zur Erläuterung des erfindungsgemäßen Verfahrens;

Fig. 2    ein detaillierteres Blockdiagramm, in dem die Bestimmung des Korrekturvektors näher dargestellt ist;

Fig. 3    ein detaillierteres Blockdiagramm, in dem die Signalaufbereitung für das Einspurmodell näher dargestellt ist; und

Fig. 4    ein detaillierteres Blockdiagramm, in dem der Ablauf der Gierraten- bzw. Gierbeschleunigungsbestimmung nach dem Einspurmodell näher dargestellt ist.

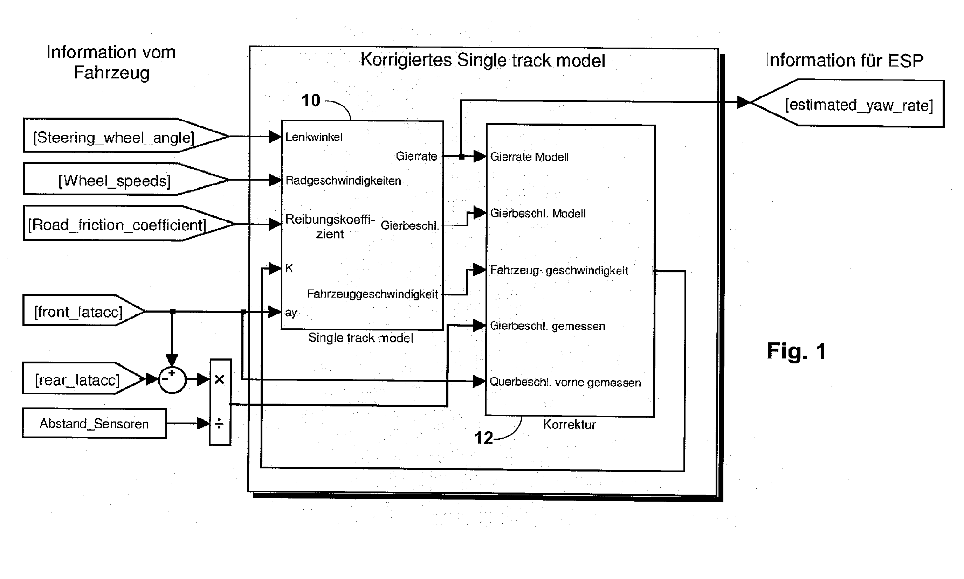

In Figur 1 ist das erfindungsgemäße Verfahren in einem Blockdiagramm schematisch auf einer hohen Abstraktionsebene dargestellt. Gemäß der Erfindung wird aus verschiedenen Fahrzeugmeßgrößen als Eingangswert (in Figur 1 links; die Eingangswerte und Ausgangswerte sind in sämtlichen Figuren jeweils mit "1" beginnend nummeriert) eine Gierrate als Ausgangswert (estimated_yaw_rate) bestimmt (in Figur 1 rechts), die wiederum als Eingangswert für ein ESP-System verwendet wird.

Die Schritte des erfindungsgemäßen Verfahrens werden bevorzugt in festgelegten Zeitabständen von einer üblichen Mikroprozessoranordnung anhand eines in einem Festwertspeicher abgelegten Programms ausgeführt. Das Programm kann Teil eines übergreifenden Programms - z.B. zum Betrieb eines ESP-Systems - sein oder auch auf einem speziell der Gierratenbestimmung vorbehaltenen Mikroprozessor ausgeführt werden.

Die entsprechenden Eingangssignale für das Einspurmodell sind der Lenkradwinkel (Steering_wheel_angle), die Rad(umfangs)geschwindigkeiten bzw. -Drehzahlen (Wheel_speeds) sowie der aktuelle Reibungskoeffizient (Road_friction_coefficient). Dabei ist es im Rahmen der Erfindung auch denkbar, daß bei dem Einspurmodell andere oder weniger Parameter als Eingangsgrößen herangezogen werden. Die genannten Werte sind - einschließlich des Reibungskoeffizienten - bei gängigen Fahrzeugen aus den üblichen Berechnungen des ESP verfügbar, so daß das erfindungsgemäße System problemlos in bestehende ESP-Anordnungen unter Verzicht auf einen dezidierten Gierratensensor integriert werden kann, wobei bei der erfindungsgemäßen Anordnung - zusätzlich zu einem bei ESP-Systemen üblicherweise vorgesehenen Querbeschleunigungssensor - ein weiterer Querbeschleunigungssensor vorgesehen ist. Dabei sind die beiden Sensoren an verschiedenen, voneinander beabstandeten Stellen im Fahrzeug angeordnet.

Die beiden Sensoren sind in Längsrichtung des Fahrzeuges vorzugsweise zumindest näherungsweise auf einer Achse (z.B. der Mittenachse des Fahrzeugs) angeordnet, wobei alternativ auch ein zusätzlicher Abstand in y-Richtung von der x-Achse für einen oder beide Sensoren möglich ist. In z-Richtung sind die Sensoren bevorzugt möglichst nahe der Rollachse angeordnet. Dabei wird der Abstand der Sensoren (Konstante Abstand_Sensoren) im Rahmen der Unterbringungsmöglichkeiten für derartige Sensoren im Fahrzeug (Platzbedarf, Anfälligkeit für Zerstörungen bei Unfällen, Möglichkeiten, Signal- und Versorgungsleitungen zuzuführen) möglichst groß gewählt, um ein möglichst gutes Signal/Rauschverhältnis zu gewährleisten. Als meßtechnisch optimal erweist sich die Anordnung der beiden Sensoren jeweils in der vorderen bzw. der hinteren Stoßstange, da auf diese Weise der maximale Abstand realisiert werden kann. Andere mögliche Positionierungen sind z.B. im Motorraum (vorderer Sensor) und an der Heck-Abschlußblech-Innenseite (hinterer Sensor) oder an der Fahrerersitzunterseite (vorderer Sensor) und an der Heck-Abschlußblech-Innenseite (hinterer Sensor). Bei den im Rahmen der Erfindung verwendeten Beschleunigungssensoren handelt es sich um handelsübliche Sensoren, die die Beschleunigung in einer vorgegeben Richtung - in diesem Falle der Querrichtung - messen.

Das Ausgangssignal des vorderen Querbeschleunigungssensors (front_latacc) wird im Rahmen der Gierratenbestimmung als zusätzliches Eingangssignal zugeführt. Aus dem Ausgangssignal des hinteren Querbeschleunigungssensors (rear_latacc) wird eine Differenz zu dem Signal des vorderen Sensors gebildet und dann durch den (konstanten) Sensorabstand dividiert, um auf diese Weise einen Schätzwert für die aktuelle Gierbeschleunigung zu erhalten. Da das Differenzsignal proportional zum Abstand der Sensoren wächst, ist der Rauschanteil des Gierbeschleunigungssignals umso geringer, desto größer der Sensorabstand ist.

Die genannten Eingangssignale werden - abgesehen von dem aus der Signaldifferenz der Beschleunigungssensoren gewonnenen Schätzwert für die Gierbeschleunigung - einem Block 10 zugeführt, in dem eine Gierrate bzw.

eine Gierbeschleunigung nach dem sog. Einspurmodell (bzw. Single track model) berechnet wird, wobei durch einen Block 12 aus der anhand der Meßwerte abgeschätzten Gierbeschleunigung unter Berücksichtigung der in Block 10 berechneten Gierbeschleunigung ein Korrekturvektor K ermittelt wird, der bei den Berechnungen im Rahmen des Einspurmodells eingeht.

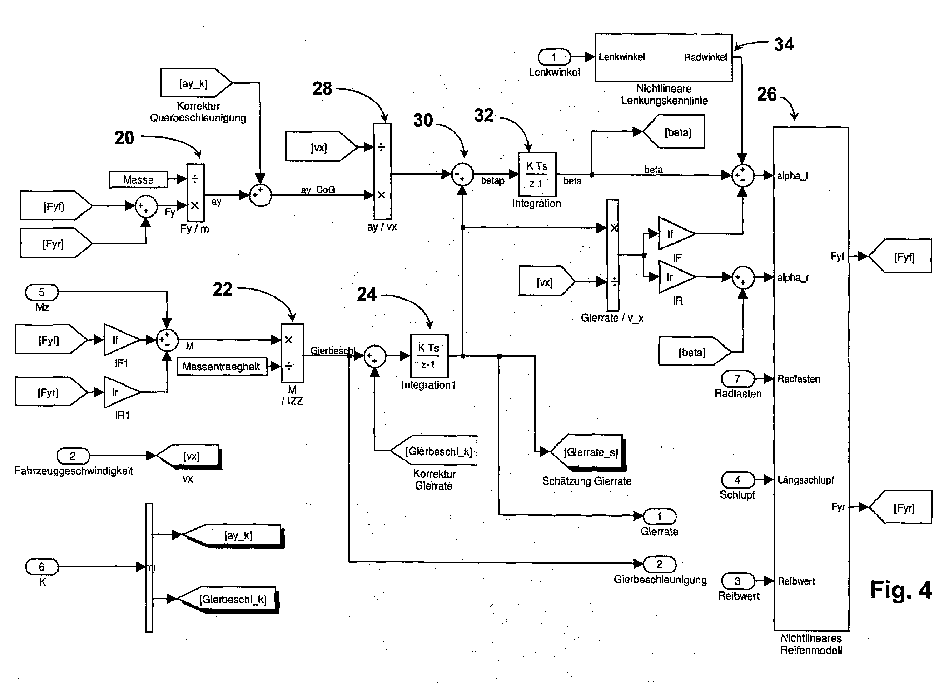

Die Berechnungen im Rahmen des Einspurmodells werden nachfolgend anhand des Diagramms gemäß Figur 4 näher erläutert, wobei in dem Diagramm die mit "f" endenden Formelzeichen jeweils die auf die Vorder- und die mit "r" endenden Formelzeichen jeweils die auf die Hinterachse bezogenen Größen bezeichnen sollen.

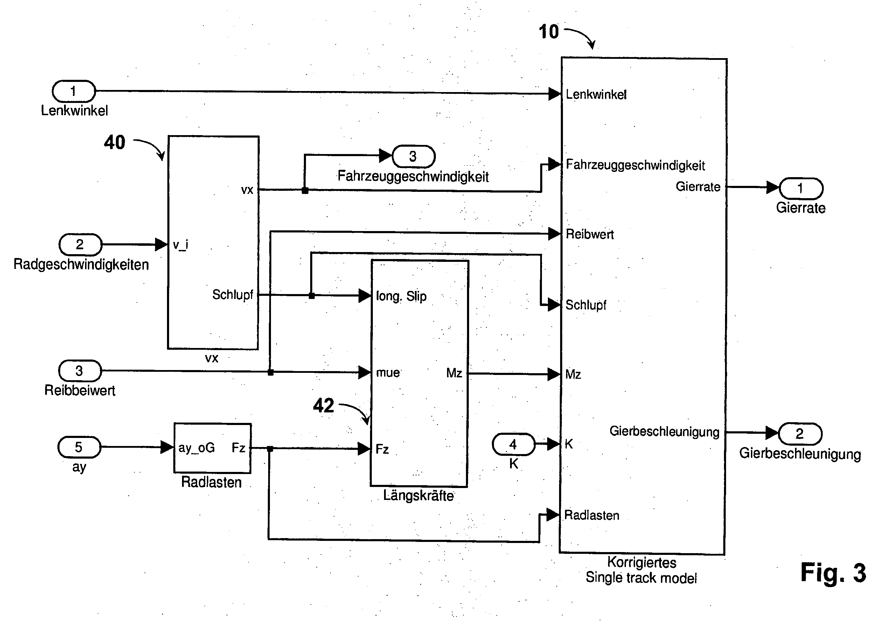

Die in Figur 1 als Eingangsgrößen dargestellten Parameter frontseitige Querbeschleunigung, Radgeschwindigkeiten sowie Reibungskoeffizient werden im Rahmen einer Signalaufbereitung, die weiter unten anhand von Figur 3 erläutert werden soll, zu den Größen vx und Mz verarbeitet, die dann in den Algorithmus gemäß Figur 4 eingehen.

Das Einspurmodell stellt ein Standardmodell zur Beschreibung des querdynamischen Verhaltens eines Fahrzeugs dar. Im Rahmen dieses Modells werden die querdynamischen Eigenschaften einer Achse (inklusive der Räder) zu einem Rad zusammengefaßt. Im einfachsten Falle werden sämtliche Eigenschaften linear beschrieben (lineares Einspurmodell); im vorliegenden Ausführungsbeispiel werden jedoch - insbesondere zur besseren Nachbildung dynamischer Effekte bei hohen Gierraten - auch nichtlineare Einflüsse - z.B. der Reifen - berücksichtigt.

Wesentliche Ausgangsparameter bei den Berechnungen des Einspurmodells gemäß Figur 4 sind die vorderen bzw. hinteren Seitenkräfte (Fyf) bzw. (Fyr), deren Berechnung weiter unten erläutert werden wird. Aus der Summe dieser Seitenkräfte wird zum einen in einem Berechnungsschritt 20 gemäß der Newtonschen Bewegungsgleichung eine Querbeschleunigung des Fahrzeugschwerpunktes berechnet. Diese wird mittels eines aus Meßwerten gewonnenen Querbeschleunigungs-Korrekturwertes, dessen Bestimmung ebenfalls weiter unten näher erläutert wird, korrigiert.

Ferner gehen die Seitenkräfte Fyf, Fyr gewichtet mit den jeweiligen Abständen der Fahrzeugachsen von dem Fahrzeugschwerpunkt (If, Ir) in die Berechnung gemäß Schritt 22 als Momente ein, wobei in diesem Schritt mittels des Drallsatzes die aktuelle Gierbeschleunigung um den Fahrzeugschwerpunkt (COG) herum berechnet wird. In diese Berechnung geht außerdem ein virtuelles Zusatzmoment Mz additiv ein, dessen rechnerische Bestimmung weiter unten erläutert werden wird. Die so erhaltene Gierbeschleunigung wird mittels eines Gierbeschleunigungs-Korrekturwertes, dessen Berechnung weiter unten näher erläutert wird, additiv korrigiert. Die Gierbeschleunigung wird dann als Ausgangswert ausgegeben. Da in Zusammenhang mit ESP-Berechnungen die Gierrate die interessantere Größe ist, wird diese durch numerische Integration der Gierbeschleunigung in einem weiteren Schritt 24 bestimmt und ausgegeben.

Die vorstehend erwähnten Seitenkräfte (Fyf) bzw. (Fyr) ergeben sich aus einem vorbestimmten, nicht linearen Reifenkennfeld 26 abhängig von den jeweiligen Schräglaufwinkeln alpha_f, alpha_r der Vorder- bzw. Hinterräder, dem Reibbeiwert mue sowie der Radlast Fz. Die Schräglaufwinkel werden berechnet, indem zunächst aus der korrigierten Querbeschleunigung mittels Division durch die Vorwärtsgeschwindigkeit vx, deren Bestimmung weiter unten näher erläutert wird, und Differenzbildung mit der Gierrate (Schritt 30) eine Schwimmwinkelgeschwindigkeit betap bzw. durch deren numerische Integration (Schritt 32) ein Schwimmwinkel beta bestimmt werden. Dieser geht in die Berechung der Radschräglaufwinkel alpha_f und alpha_r zusammen mit einer geometrischen Beziehung aus Gierrate, Fahrgeschwindigkeit vx und Schwerpunktabstand zur Vorder-, bzw. Hinterachse (If, Ir) ein. Für die (lenkbare) Vorderachse wird zusätzlich noch aus dem gemessenen Lenkradwinkel über eine nicht lineare Lenkungskennlinie 34 ein entsprechender Lenkausschlag berechnet und additiv (lediglich bei dem Radschräglaufwinkel für die Fronträder) berücksichtigt.

In Figur 3 ist die Signalaufbereitung für die bei dem vorstehend beschriebenen Einspurmodell (Block 10) verwendeten Eingangsgrößen detaillierter dargestellt. Es hat sich im Rahmen der Erfindung herausgestellt, daß die üblicherweise von einem Antiblockiersystem (ABS) bereitgestellte Fahrzeuggeschwindigkeit für die Verwendung im Rahmen des Einspurmodells nicht optimal ist. Aus diesem Grunde wird speziell für das Einspurmodell in einem Block 40 eine mittlere gewichtete Fahrzeuggeschwindigkeit $V_{Mittel\_gewichtet}$ (= Ausgangswert vx) aus den Umfangsgeschwindigkeiten $V_{Rad,i}$ der vier Einzelräder wie folgt ermittelt:

$$v_{Mittel} = \frac{q_1 \times \sum v_{Rad1,2} + q_2 \times \sum v_{Rad3,4}}{2 \times (q_1 + q_2)}; q_{1,2} = const;$$

$$v_{RadAbweichung,\_i} = \left( \frac{k_1 - (v_{Rad,i} - v_{Mittel}) \times k_2}{v_{Mittel}} \right)^2; k_1, k_2 = const$$

4

$$v_{Mittel\_gewichtet} = \frac{\sum v_{RadAbweichung\_i} \times v_{Rad,i}}{\sum v_{RadAbweichung\_i}}$$

wobei die Konstanten $q_{1,2}$ und $k_{1,2}$ geeignet gewählt werden und wobei die Konstanten $q_{1,2}$ eine Gewichtung zwischen Vorderachse (Rad 1 und 2) und Hinterachse (Rad 3 und 4) bewirken. Durch diese gewichtete Mittelwertbildung werden "Ausreißer" aufgrund durchdrehender Räder (speziell bei geringem Reibwert) oder aufgrund evtl. ESP-Eingriffe kompensiert.

In einem Block 42 wird außerdem ein virtuelles Korrekturmoment Mz bereitgestellt, das im Rahmen der Bestimmung des Drallmomentes in das Einspurmodell additiv eingeht. Durch diese virtuelle Korrekturkraft werden ABS- und ESP-Eingriffe berücksichtigt. Das virtuelle Korrekturmoment entspricht dem Moment, das das ESP zur Stabilisierung des Fahrzeuges als notwendig ermittelt. Ist dieses aus dem ESP-System bekannt, kann es direkt verwandt werden.Seite: 9 Alternativ kann es - wie in Block 42 - dargestellt über den Radschlupf berechnet werden. Hierzu wird im Rahmen von Block 40 für jedes Rad aus der Differenz zwischen tatsächlich gemessener Radgeschwindigkeit und der gemittelten Radgeschwindigkeit - letztere korrigiert um die durch den Lenkwinkel verursachte Veränderung zwischen den inneren und äußeren Radgeschwindigkeiten - ein Längsschlupf long_slip berechnet. Unter Berücksichtigung des Reibungskoeffizienten bzw. des Reibbeiwertes (mue) und der aus der (mittels des frontseitigen Beschleunigungssensors gemessenen) Querbeschleunigung ay Fahrzeugmasse und geometrischen Verhältnissen berechneten Radlasten (Fz) wird das entsprechende Korrekturmoment Mz berechnet.

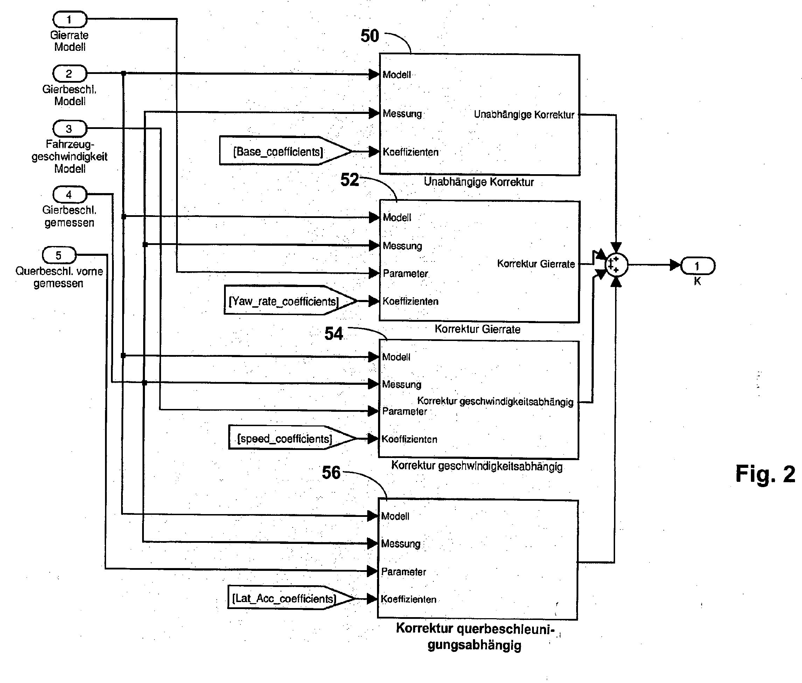

In Figur 2 ist die Berechnung eines Gierbeschleunigungs-Korrekturwertes dargestellt, der eine erste Komponente des Korrekturvektors K darstellt (dieser Korrekturvektor kann im Rahmen der Erfindung auch lediglich diesen Gierbeschleunigungs-Korrekturwert als einzige Komponente aufweisen). Der Gierbeschleunigungs-Korrekturwert wird gemäß Figur 2 durch additive Überlagerung von vier Interpolationsfunktionen 50, 52, 54, 56 berechnet. Als Interpolationsfunktionen kommen beispielsweise Polynome in Betracht. Sämtliche Interpolationsfunktionen hängen von der wie vorstehend beschrieben gemessenen bzw. abgeschätzten Gierbeschleunigung sowie der gemäß dem Einspurmodell bestimmten (bereits korrigierten) Gierbeschleunigung ab, ggf. können ein oder mehrere der Interpolationsfunktionen auch oder ausschließlich von der Differenz dieser beiden Größen, d.h. einer Sollwert/Istwertabweichung abhängig sein. Eine erste Interpolationsfunktion 50 ist ausschließlich von den beiden genannten Größen abhängig (unabhängige Korrektur). Bei den weiteren Interpolationsfunktionen 52, 54 und 56 kommt jeweils die Gierrate, die (gemittelte) Fahrzeuggeschwindigkeit sowie die vorne gemessene Querbeschleunigung als weiterer Parameter hinzu. Die Korrekturkoeffizienten (Base_coefficients, Yaw_rate_coefficients, speed_coefficients und Lat_Acc_coefficients) werden herstellerseitig im Rahmen umfassender Testreihen ermittelt, bei denen das Fahrzeug auch extremen Fahrzuständen ausgesetzt wird und die erfindungsgemäß erhaltenen Gierraten- bzw. Gierbeschleunigungswerte und Querbeschleunigungswerte jeweils mit den Meßwerten eines "echten" Gierratensensors und auch des originalen Querbeschleunigungssensors verglichen werden. Durch eine Kurvenanpassung an die entsprechenden Meßpunkte (z.B. Minimierung der Abweichungsquadrate) werden die optimalen Koeffizienten bestimmt und anschließend fest gespeichert.

Durch dieses "Training" wird die Genauigkeit des erfindungsgemäßen Verfahrens auch bei extremen fahrdynamischen Zuständen (z.B. bei hohen Gierraten) gewährleistet, bei denen sich die Vereinfachungen im Rahmen des Einspurmodells üblicherweise negativ auswirken würden. Eine Anpassung des erfindungsgemäßen Systems an neue Fahrzeugtypen mit anderen dynamischen Eigenschaften kann entsprechend einem vorgegebenen "automatisierten" Procedere erfolgen, sofern ausreichend Daten für repräsentative Fahrmanöver vorliegen. Damit werden die Entwicklungszeiten verkürzt und mögliche Fehlerquellen bei der Gierratenbestimmung, die nur schwer zu identifizieren wären, von Vornherein ausgeschlossen. Andererseits kann durch die vorgeschlagene Positionierung der Sensoren in x-Richtung des Fahrzeugs mit möglichst großem Abstand das Signal/Rauschverhältnis bei kleinen Gierraten soweit verbessert werden, daß auch in diesen Betriebszustandsbereichen genauere Giermeßwerte als nach dem Stand der Technik erzielt werden.

Eine entsprechende Korrekturwertbestimmung, wie in Figur 2 für den Gierbeschleunigungs-Korrekturwert (Gierbeschl_k) dargestellt, wird auch für den Lateralbeschleunigungs-Korrekturwert (ay_k) unter Berücksichtigung der gleichen zusätzlichen Parameter (also Gierrate, Geschwindigkeit und Querbeschleunigung) vorgenommen, wobei anstelle der Modellgierrate als Parameter die im Einspurmodell bestimmte Querbeschleunigung (ay) herangezogen wird und anstelle der Gierbeschleunigung die vorderseitig gemessene Querbeschleunigung als Meßwert für die Korrektur verwendet wird. In diesem Falle kann eine erste Interpolationsfunktion ebenfalls ausschließlich von den beiden genannten Größen Modellquerbeschleunigung und Meßquerbeschleunigung abhängig sein (unabhängige Korrektur). Bei weiteren Interpolationsfunktionen kann jeweils die Gierrate sowie die (gemittelte) Fahrzeuggeschwindigkeit als weiterer Parameter herangezogen werden.

Die Erfindung kann auch zur Bestimmung einer Rollrate bzw. einer Rollbeschleunigung eingesetzt werden. In diesem Falle sollte ein weiterer Beschleunigungssensor möglichst hoch am Fahrzeug (z.B. im Zwischenraum zwischen Fahrzeughimmel und Fahrzeugdach) angeordnet werden, der sich möglichst auf gleicher x/y-Position wie ein am Fahrzeugboden angeordneter Sensor befindet. Die aus der Meßwertdifferenz gewonnene Rollbeschleunigung kann dann zur Korrektur eines fahrzeugdynamischen Modells der Rollbewegung herangezogen werden.

**Patentansprüche**

1. Verfahren zur Bestimmung eines Gierratenwertes und/oder eines Gierbeschleunigungswertes aus fahrdynamischen Messwerten bei einem Fahrzeug mit elektronischem Stabilitätsprogramm (ESP), wobei das Fahrzeug eine Mehrzahl von Sensoren, einschließlich zweier Querbeschleunigungssensoren aufweist, welche in einer horizontalen Ebene voneinander beabstandet angeordnet sind,
**gekennzeichnet durch** folgende Schritte:

   a) Bestimmung eines Gierbeschleunigungsschätzwertes wenigstens basierend auf der Differenz der Meßwerte der beiden Querbeschleunigungssensoren;
   b) Berechnung des Gierratenwertes und/oder des Gierbeschleunigungswertes anhand des Gierbeschleunigungsschätzwertes basierend auf einem fahrdynamischen Einspurmodell unter Einbeziehung eines Korrekturvektors (K); und
   c) Berechnung des Korrekturvektors (K) basierend auf dem Gierbeschleunigungsschätzwert und dem berechneten Gierbeschleunigungswert.

2. Verfahren nach Anspruch 1,
**gekennzeichnet durch** folgende weitere Schritte:

   d) Bestimmung eines Lenkwinkelmeßwertes, eines Fahrzeuggeschwindigkeitsmeßwertes sowie von zwei Querbeschleunigungsmeßwerten der beiden Querbeschleunigungssensoren,
   e) Bestimmung eines ein Maß für den Reibwert zwischen Fahrbahn und Reifen darstellenden Reibungskoeffizienten (mue); und
   f) Berechnung des Gierratenwertes und/oder des Gierbeschleunigungswertes basierend auf einem fahrdynamischen Einspurmodell unter Einbeziehung des Korrekturvektors (K), wobei die Eingangsparameter des Einspurmodells wenigstens den Lenkwinkelmeßwert, den Fahrzeuggeschwindigkeitsmeßwert (vx), wenigstens einen der Querbeschleunigungsmeßwerte (ay) sowie den Reibungskoeffizienten (mue) umfassen.

3. Verfahren nach Anspruch 2,
**dadurch gekennzeichnet, daß**
der Korrekturvektor (K) zwei Komponenten aufweist, wobei die erste Komponente einen Querbeschleunigungs-Korrekturwert darstellt, welcher zu der in die Berechnungen im Rahmen des Einspurmodells eingehenden Fahrzeug-Querbeschleunigung addiert wird, und die zweite Komponente einen Gierbeschleunigungs-Korrekturwert darstellt, der zu der anhand des Einspurmodells berechneten Ausgangswert der Gierbeschleunigung addiert wird.

4. Verfahren nach Anspruch 2 oder 3,
**dadurch gekennzeichnet, daß**
bei der Berechnung des Gierbeschleunigungs-Korrekturwertes neben der Meßgierbeschleunigung zusätzlich der mittels des korrigierten Einspurmodells berechnete Gierbeschleunigungswert sowie ein oder mehrere - bevorzugt sämtliche - der folgenden Größen berücksichtigt werden: Der mittels des korrigierten Einspurmodells berechnete Gierratenwert, der Fahrzeuggeschwindigkeitsmeßwert (vx) und/oder ein Querbeschleunigungsmeßwert, vorzugsweise der Meßwert eines frontseitig angeordneten Querbeschleunigungssensors.

5. Verfahren nach Anspruch 4,
**dadurch gekennzeichnet, daß**
der Gierbeschleunigungs-Korrekturwert aus einer additiven Überlagerung von Interpolationsfunktionen berechnet wird, die jeweils die Meßgierbeschleunigung sowie den mittels des korrigierten Einspurmodells berechneten Gierbeschleunigungswert als Parameter aufweisen, wobei eine erste Interpolationsfunktion nur von den beiden vorstehend genannten Parametern abhängig ist, und ein oder mehrere weitere Interpolationsfunktionen jeweils zusätzlich von einem der folgenden Parameter abhängen: Dem mittels des korrigierten Einspurmodells berechneten Gierratenwert, dem Fahrzeuggeschwindigkeitsmeßwert (vx) und/oder einem Querbeschleunigungsmeßwert;
wobei die Koeffizienten sämtlicher Interpolationsfunktionen im Rahmen eines herstellerseitigen Kalibriervorganges mittels eines Fitting-Verfahrens durch Vergleich mit den Meßwerten eines in einem Versuchsaufbau zusätzlich vorgesehenen Gierbeschleunigungssensors unter Zugrundelegung einer Vielzahl unterschiedlicher Fahrsituationen angepaßt werden.

**6.** Verfahren nach mindestens einem der Ansprüche 1 bis 5,
**dadurch gekennzeichnet, daß**
der Fahrzeuggeschwindigkeitsmeßwert (vx) als gewichteter Mittelwert aus den Umfangsgeschwindigkeiten der einzelnen Räder des Fahrzeugs ermittelt wird.

**7.** Verfahren nach Anspruch 6,
**dadurch gekennzeichnet, daß**
aus der Differenz der jeweiligen Umfangsgeschwindigkeiten der einzelnen Fahrzeugräder gegenüber dem gemittelten Fahrzeuggeschwindigkeitsmeßwert unter Berücksichtigung des sich durch den Lenkwinkelmeßwert ergebenden erwarteten Drehzahlunterschiedes für jedes Fahrzeugrad ein Schlupf berechnet wird, und daß aus diesem Schlupf unter Berücksichtigung des Reibungskoeffizienten und der Querbeschleunigung eine virtuelle Korrekturquerkraft berechnet wird, die im Rahmen der Bewegungsgleichungen des Einspurmodells berücksichtigt wird.

**8.** Anordnung zur Durchführung des Verfahrens nach mindestens einem der Ansprüche 2 bis 7,
**dadurch gekennzeichnet, daß**
die beiden Querbeschleunigungssensoren mit einem möglichst großen Längsabstand (x-Richtung des Fahrzeugs) angeordnet sind.

**9.** Anordnung nach Anspruch 8,
**dadurch gekennzeichnet, daß**
die beiden Querbeschleunigungssensoren jeweils an folgenden Stellen im Fahrzeug angeordnet sind:

Front bzw. Heckstoßstange oder
Motorraum bzw. Heck-Abschlußblech-Innenseite oder
Fahrerersitzunterseite bzw. Heck-Abschlußblech-Innenseite.

**10.** Verfahren zur Bestimmung eines Rollratenwertes und/oder eines Rollbeschleunigungswertes aus fahrdynamischen Messwerten bei einem Fahrzeug mit elektronischem Stabilitätsprogramm (ESP), wobei das Fahrzeug eine Mehrzahl von Sensoren, einschließlich zweier Querbeschleunigungssensoren aufweist, welche in einer vertikalen Ebene voneinander beabstandet angeordnet sind,
**dadurch gekennzeichnet**, durch folgende Schritte:

a) Bestimmung eines Rollbeschleunigungsschätzwertes wenigstens basierend auf der Differenz der Messwerte der beiden Querbeschleunigungssensoren;
b) Berechnung des Rollwinkelwertes und/oder des Rollratenwertes anhand des Rollbeschleunigungsschätzwertes basierend auf einem Rollmodell unter Einbeziehung eines Korrekturvektors (K); und
c) Berechnung des Korrekturvektors (K) basierend auf dem Rollbeschleunigungsschätzwert und dem berechneten Rollbeschleunigungswert.

**Claims**

**1.** Method for determining a yaw rate value and/or a yaw acceleration value from vehicle dynamics measured values in a vehicle with an electronic stability programme (ESP), wherein the vehicle has a multiplicity of sensors, including two lateral acceleration sensors which are arranged spaced apart from one another in a horizontal plane,
**characterized by** the following steps:

a) determination of a yaw acceleration estimated value at least on the basis of the difference between the measured values of the two lateral acceleration sensors;
b) calculation of the yaw rate value and/or of the yaw acceleration value by means of the yaw acceleration estimated value on the basis of a vehicle dynamics single-trace model using a correction vector (K); and
c) calculation of the correction vector (K) on the basis of the yaw acceleration estimated value and the calculated yaw acceleration value.

**2.** Method according to Claim 1,
**characterized by** the following further steps:

d) determination of a steering angle measured value, a vehicle velocity measured value and two lateral acceleration measured values of the two lateral acceleration sensors,
e) determination of a coefficient of friction (mue) representing a measure of the coefficient of friction between the underlying surface and the tyre; and
f) calculation of the yaw rate value and/or of the yaw acceleration value on the basis of a vehicle dynamics single-track model including the correction vector (K), wherein the input parameters of the single-track model comprise at least the steering angle measured value, the vehicle velocity measured value (vx), at least one of the lateral acceleration measured values (ay) and the coefficient of friction (mue).

**3.** Method according to Claim 2,
**characterized in that**
the correction vector (K) has two components, wherein the first component represents a lateral acceleration correction value which is added to the vehicle lateral acceleration which is included in the calculations within the scope of the single-track model, and the second component represents a yaw acceleration correction value which is added to the output value of the yaw acceleration which is calculated by means of the single-track model.

**4.** Method according to Claim 2 or 3,
**characterized in that**
in addition to the measured yaw acceleration, the yaw acceleration value which is calculated by means of the corrected single-track model and one or more, preferably all, of the following variables are also taken into account during the calculation of the yaw acceleration correction value: the yaw rate value which is calculated by means of the corrected single-track model, the vehicle velocity measured value (vx) and/or a lateral acceleration measured value, preferably the measured value of a lateral acceleration sensor which is arranged at the front of the vehicle.

**5.** Method according to Claim 4,
**characterized in that**
the yaw acceleration correction value is calculated from an additive superimposition of interpolation functions which each has as parameters the measured yaw acceleration and the yaw acceleration value which is calculated by means of the corrected single-track model, wherein a first interpolation function is dependent only on the two parameters mentioned above, and one or more further interpolation functions also respectively depend on one of the following parameters: the yaw rate value which is calculated by means of the corrected single-track model, the vehicle velocity measured value (vx) and/or a lateral acceleration measured value;
wherein the coefficients of all the interpolation functions are adapted within the scope of a manufacturer-side calibration process by means of a fitting method by comparison with the measured values of a yaw acceleration sensor which is additionally provided in the trial set up, using a plurality of different driving situations as the basis.

**6.** Method according to at least one of Claims 1 to 5,
**characterized in that**
the vehicle velocity measured value (vx) is acquired as a weighted average from the circumferential speeds of the individual wheels of the vehicle.

**7.** Method according to Claim 6,
**characterized in that**
a slip is calculated from the difference between the respective circumferential speeds of the individual vehicle wheels compared to the average vehicle velocity measured value taking into account the anticipated difference in rotational speed, resulting from the steering angle measured value, for each vehicle wheel, and **in that** a virtual correction lateral force is calculated from this slip taking into account the coefficient of friction and the lateral acceleration, and said correction lateral force is taken into account in the scope of the movement equations of the single-track model.

**8.** Arrangement for carrying out the method according to at least one of Claims 2 to 7,
**characterized in that**
the two lateral acceleration sensors are arranged with a longitudinal distance (x direction of the vehicle) which is as large as possible.

**9.** Arrangement according to Claim 8,

**characterized in that**
the two lateral acceleration sensors are each arranged at the following locations in the vehicle:

the front bumper or rear bumper or
engine compartment or on the inside of the rear terminating metal sheet or
underside of driver's seat or inside of rear terminating metal sheet.

10. Method for determining a rolling rate value and/or a rolling acceleration value from vehicle dynamics measured values in a vehicle with an electronic stability programme (ESP), wherein the vehicle has a multiplicity of sensors, including two lateral acceleration sensors which are arranged spaced apart from one another in a vertical plane, **characterized by** the following steps:

a) determination of a rolling acceleration estimated value at least on the basis of the difference between the measured values of the two lateral acceleration sensors;
b) calculation of the rolling angle value and/or of the rolling rate value by means of the rolling acceleration estimated value on the basis of a rolling model including a correction vector (K) ; and
c) calculation of the correction vector (K) on the basis of the rolling acceleration estimated value and the calculated rolling acceleration value.

## Revendications

1. Procédé de détermination du taux de lacet et/ou d'une valeur d'accélération de lacet à partir de valeurs dynamiques de conduite mesurées sur un véhicule avec un programme de stabilisation électronique (ESP), le véhicule présentant une pluralité de capteurs, y compris deux capteurs d'accélération transversale, qui sont disposés espacés l'un de l'autre dans un plan horizontal, **caractérisé par** les étapes suivantes :

a) Détermination d'une valeur estimée de l'accélération de lacet en se basant au moins sur la différence entre les valeurs mesurées des deux capteurs d'accélération transversale ;
b) Calcul de la valeur du taux de lacet et/ou de la valeur de l'accélération de lacet au moyen de la valeur estimée de l'accélération de lacet en se basant sur un modèle de voie unique dynamique de conduite en faisant intervenir un vecteur de correction (K) ; et
c) Calcul du vecteur de correction (K) en se basant sur la valeur estimée de l'accélération de lacet et la valeur calculée de l'accélération de lacet.

2. Procédé selon la revendication 1, **caractérisé par** les étapes supplémentaires suivantes :

d) Détermination d'une valeur mesurée de l'angle de direction, d'une valeur mesurée de la vitesse du véhicule ainsi que de deux valeurs mesurées de l'accélération transversale des deux capteurs d'accélération transversale ;
e) Détermination d'un indice pour le coefficient de friction (mue) représentant l'indice de frottement entre la chaussée et les pneumatiques ; et
f) Calcul de la valeur du taux de lacet et/ou de la valeur de l'accélération de lacet en se basant sur un modèle de voie unique dynamique de conduite en faisant intervenir un vecteur de correction (K), les paramètres d'entrée du modèle de voie unique comprenant au moins la valeur mesurée de l'angle de direction, la valeur mesurée de la vitesse du véhicule (vx), au moins l'une des deux valeurs mesurées de l'accélération transversale (ay) ainsi que le coefficient de friction (mue) .

3. Procédé selon la revendication 2, **caractérisé en ce que** le vecteur de correction (K) présente deux composants, le premier composant représentant une valeur de correction de l'accélération transversale qui est additionnée à l'accélération transversale du véhicule qui intervient dans les calculs dans le cadre du modèle de voie unique et le deuxième composant représentant une valeur de correction de l'accélération de lacet qui est additionné à la valeur initiale de l'accélération de lacet calculée au moyen du modèle de voie unique.

4. Procédé selon la revendication 2 ou 3, **caractérisé en ce que** la valeur d'accélération de lacet corrigée au moyen du modèle de voie unique corrigé ainsi qu'une ou plusieurs - de préférence la totalité - des grandeurs suivantes sont prises en compte lors du calcul de la valeur de correction de l'accélération de lacet : la valeur du taux de lacet calculée au moyen du modèle de voie unique corrigé, la valeur mesurée de la vitesse du véhicule (vx) et/ou une valeur mesurée de l'accélération transversale, de préférence la valeur mesurée d'un capteur d'accélération disposé du côté frontal.

5. Procédé selon la revendication 4, **caractérisé en ce que** la valeur de correction de l'accélération de lacet est calculée à partir d'une superposition additive de fonctions d'interpolation qui présentent respectivement, en tant que paramètres, l'accélération de lacet mesurée ainsi que la valeur de l'accélération de lacet calculée au moyen du modèle de voie unique corrigé, une première fonction d'interpolation ne dépendant que des deux paramètres mentionnés ici et une ou plusieurs autres fonctions d'interpolation dépendant respectivement en plus de l'un des paramètres suivants : la valeur du taux de lacet calculée au moyen du modèle de voie unique corrigé, la valeur mesurée de la vitesse du véhicule (vx) et/ou une valeur mesurée de l'accélération transversale ;
les coefficients de toutes les fonctions d'interpolation étant adaptés dans le cadre d'une opération de calibrage réalisée par le constructeur au moyen d'un procédé d'adaptation par comparaison avec les valeurs mesurées d'un capteur d'accélération de lacet supplémentaire prévu dans un essai de construction en se basant sur un grand nombre de situations de conduite différentes.

6. Procédé selon l'une des revendications 1 à 5, **caractérisé en ce que** la valeur mesurée de la vitesse du véhicule (vx) est déterminée en tant que valeur moyenne pondérée à partir des vitesses circonférentielles des roues individuelles du véhicule.

7. Procédé selon la revendication 6, **caractérisé en ce qu'**un glissement est calculé à partir de la différence des vitesses circonférentielles respectives des roues individuelles du véhicule par rapport à la valeur mesurée de la vitesse du véhicule en tenant compte de la différence de vitesse de rotation attendue pour chaque roue du véhicule résultant de la valeur mesurée de l'angle de direction, et **en ce qu'**une force transversale de correction virtuelle est calculée à partir de ce glissement en tenant compte du coefficient de friction et de l'accélération transversale, laquelle est prise en compte dans le cadre des équations de mouvement du modèle de voie unique.

8. Arrangement pour mettre en ouvre le procédé selon au moins l'une des revendications 2 à 7, **caractérisé en ce que** les deux capteurs d'accélération transversale sont disposés avec un écart longitudinal (sens x du véhicule) le plus grand possible.

9. Arrangement selon la revendication 8, **caractérisé en ce que** les deux capteurs d'accélération transversale sont disposés respectivement aux endroits suivants dans le véhicule :

   à l'avant ou sur le pare-choc arrière ou
   dans le compartiment moteur ou sur le côté intérieur de la tôle de terminaison de l'arrière ou
   sur le dessous du siège du conducteur ou sur le côté intérieur de la tôle de terminaison de l'arrière.

10. Procédé de détermination d'une valeur de roulis et/ou d'une valeur d' accélération de roulis à partir de valeurs dynamiques de conduite mesurées sur un véhicule avec un programme de stabilisation électronique (ESP), le véhicule présentant une pluralité de capteurs, y compris deux capteurs d'accélération transversale, qui sont disposés espacés l'un de l'autre dans un plan horizontal,
**caractérisé par** les étapes suivantes :

   a) Détermination d'une valeur estimée de l'accélération de roulis en se basant au moins sur la différence entre les valeurs mesurées des deux capteurs d'accélération transversale ;
   b) Calcul de la valeur de l'angle de roulis et/ou de la valeur du taux de roulis au moyen de la valeur estimée de l'accélération de roulis en se basant sur un modèle de roulis en faisant intervenir un vecteur de correction (K) ; et
   c) Calcul du vecteur de correction (K) en se basant sur la valeur estimée de l'accélération de roulis et la valeur calculée de l'accélération de roulis.

Information für ESP

[estimated_yaw_rate]

Information vom Fahrzeug

[Steering_wheel_angle]

[Wheel_speeds]

[Road_friction_coefficient]

[front_latacc]

[rear_latacc]

Abstand_Sensoren

Korrigiertes Single track model

10

Lenkwinkel — Gierrate

Radgeschwindigkeiten

Reibungskoeffi-zient — Gierbeschl.

K

ay — Fahrzeuggeschwindigkeit

Single track model

Gierrate Modell

Gierbeschl. Modell

Fahrzeug- geschwindigkeit

Gierbeschl. gemessen

Querbeschl. vorne gemessen

Korrektur

12

Fig. 1

11

Fig. 2

K

50 — Unabhängige Korrektur

Modell
Messung
Koeffizienten

Unabhängige Korrektur

[Base_coefficients]

52 — Unabhängige Korrektur

Modell
Messung
Parameter
Koeffizienten

Korrektur Gierrate

[Yaw_rate_coefficients]

54 — Korrektur Gierrate

Modell
Messung
Parameter
Koeffizienten

Korrektur geschwindigkeitsabhängig

[speed_coefficients]

56 — Korrektur geschwindigkeitsabhängig

Modell
Messung
Parameter
Koeffizienten

Korrektur querbeschleuni-gungsabhängig

[Lat_Acc_coefficients]

1 Gierrate Modell

2 Gierbeschl. Modell

3 Fahrzeug-geschwindigkeit Modell

4 Gierbeschl. gemessen

5 Querbeschl. vorne gemessen

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5878357 A